Europäisches Patentamt

European Patent Office

Office européen des brevets

(19)

(11) **EP 0 637 644 B1**

(12) **FASCICULE DE BREVET EUROPEEN**

(45) Date de publication et mention
de la délivrance du brevet:
**27.08.1997 Bulletin 1997/35**

(51) Int Cl.⁶: **D21H 19/62**, C08G 12/12,
D21H 19/46, D21H 19/64

(21) Numéro de dépôt: **94401418.2**

(22) Date de dépôt: **23.06.1994**

(54) **Compositions pour le traitement des surfaces des papiers et/ou des cartons et leur application en industrie papetière**

Zusammensetzungen zur Oberflächenbehandlung von Papier und/oder Pappe, und ihre Verwendung in der Papierherstellungsindustrie

Compositions for the surface treatment of paper and/or cardboard, and their application in the paper industry

(84) Etats contractants désignés:
**AT BE CH DE DK ES FR GB IT LI NL SE**

(30) Priorité: **05.07.1993 FR 9308198**

(43) Date de publication de la demande:
**08.02.1995 Bulletin 1995/06**

(73) Titulaire: **SOCIETE FRANCAISE HOECHST
Société anonyme dite:
F-92800 Puteaux (FR)**

(72) Inventeur: **Trouve, Claude
F-91330 Yerres (FR)**

(74) Mandataire: **Rinuy, Santarelli
14, avenue de la Grande Armée
75017 Paris (FR)**

(56) Documents cités:
**EP-A- 0 120 308          US-A- 3 576 591
US-A- 3 765 836          US-A- 4 343 655**

- **DATABASE WPI Section Ch, Week 9224,
Derwent Publications Ltd., London, GB; Class
A11, AN 92-197945 & SU-A-1 675 457 (PAPER
RES INST) 7 Septembre 1991**

## Description

La présente invention concerne des compositions pour le traitement des surfaces des papiers et/ou des cartons et leur application en industrie papetière.

Dans l'industrie papetière, il est connu de modifier l'état de surface du papier en fonction des applications souhaitées. Ainsi, pour certains usages, notamment pour l'impression offset, on demande un papier présentant non seulement de la rigidité et de l'opacité, mais également une surface rendant bien l'impression tout en possédant une bonne résistance à l'abrasion humide, à l'arrachage humide, au peluchage et au poussièrage ainsi qu'une inertie satisfaisante vis à vis de l'eau. Pour ce faire, on a proposé de traiter les papiers avec des sauces de couchage contenant des pigments minéraux associés à des liants : amidon, caséine, fécule modifiée, latex SBR. Afin d'améliorer la tenue à l'eau des revêtements ainsi obtenus, il est connu d'introduire dans les sauces de couchage du glyoxal, des résines aminoplastes à base d'urée et/ou de mélamine et de glyoxal, de formaldéhyde ou de mélange glyoxal-formaldéhyde, et parfois des sels de zirconium (brevets US-A-3 576 591, 3 765 836, 3 869 296, 3 197 659, 4 343 655, 4 455 416 et 4 471 087). Toutefois, ces procédés connus présentent de nombreux inconvénients, à savoir : le glyoxal ne peut pas être utilisé dans des sauces de couchage alcalines et, de plus, les papiers couchés avec des sauces de couchage contenant à l'état libre ou combiné du glyoxal jaunissent facilement et ils ne peuvent supporter des températures de séchage élevées. Les résines aminoplastes contenant du formaldéhyde en libèrent au cours des traitements, ce qui rend leur utilisation incompatible avec certaines législations. Quant aux sels de zirconium, ils sont pratiquement inefficaces avec les amidons.

SU-A-1 675 457 décrit une composition de couchage pour papier à base de glyoxal et d'urée, dépourvue de sel de bore ou d'hydroxyde de métal alcalino-terreux. EP-A- 120 308 décrit un insolubilisant de couchage également dénué de sel de bore ou d'hydroxyde de métal alcalino-terreux.

Afin d'obvier à ces inconvénients, la demanderesse a découvert de nouvelles compositions utilisables dans le traitement des surfaces des papiers et des cartons améliorant l'inertie vis à vis de l'eau, la résistance à l'abrasion humide, à l'arrachage humide, au poussièrage et au peluchage, sans diminuer pour autant la blancheur des papiers traités.

Les compositions selon l'invention sont caractérisées par le fait qu'elles contiennent, en solution auqueuse, un mélange constitué par du glyoxal, désigné ci-après G, de l'urée, désignée ci-après U, d'un sel de métal alcalin d'un acide oxygéné du bore, et que le pH desdites compositions est ajusté à un pH inférieur à 6 à l'aide d'un hydroxyde de métal alcalino-terreux.

Par "sel de métal alcalin d'un acide oxygéné du bore", on désigne les produits de formule (I) :

$$M_2O, (B_2O_3)_m, nH_2O$$

dans laquelle M représente un métal alcalin, m représente 1,2 ou 5 et n représente 2,5 , 4, 5, 8 ou 10. Parmi les produits de formule (I), on peut citer les borates de métal alcalin mentionnés dans Encyclopedia of Chemical Technology, KIRK-OTHMER, 4ème édition, vol. 4, page 383, John Wiley and Sons, New York. Préférentiellement, le produit de formule (I) est le tétraborate de disodium cristallisé avec 10 molécules d'eau, appelé communément borax, désigné ci-après A.

Par "hydroxyde de métal alcalino-terreux", on désigne de préférence l'hydroxyde de calcium.

L'invention a plus particulièrement pour objet les compositions telles que définies ci-dessus caractérisées par le fait que le sel de métal alcalin d'un acide oxygéné du bore est le borax A. Parmi ces dernières compositions, on peut citer plus particulièrement celles qui contiennent, en solution aqueuse, un mélange de glyoxal, d'urée et de borax, en quantités telles que, d'une part, les rapports molaires de ces divers produits obéissent aux relations suivantes :

$$0,1 \leq \frac{U}{G} \leq 2 \qquad\qquad\qquad \text{(Rel. 1)}$$

$$0,01 \leq \frac{A}{G} \leq 0,5 \qquad\qquad\qquad \text{(Rel. 2)}$$

et que, d'autre part, le pH desdites compositions est ajusté à un pH inférieur à 6 avec de l'hydroxyde de calcium, désigné ci-après D.

Parmi ces dernières compositions, on peut citer celles caractérisées par le fait qu'elles présentent un pH inférieur à 6 et qu'elles contiennent, en solution aqueuse, entre environ 10 % et environ 60 % en poids d'un mélange de glyoxal, d'urée, de borax et d'hydroxyde de calcium.

Parmi ces dernières compositions, l'invention a notamment pour objet les compositions contenant, en solution aqueuse environ 40 ± 5 % en poids d'un mélange contenant pour 1 mole de glyoxal, de 0,1 à 0,5 mole d'urée, de 0,01 à 0,2 mole de borax et une quantité d'hydroxyde de calcium telle que le pH de la composition soit inférieur à 6.

Parmi ces dernières compositions on peut citer plus particulièrement celles dans lesquelles le rapport molaire D/A obéit à la relation suivante :

$$0,1 \leq \frac{D}{A} \leq 1,3 \qquad\qquad (\text{Rel. 3})$$

Le glyoxal et l'urée contenus dans les compositions de l'invention peuvent être soit à l'état libre, soit à l'état combiné, soit enfin partiellement combinés entre eux.

Les compositions selon l'invention sont obtenues par simple mélange de leurs constituants dans de l'eau. Préférentiellement, les compositions selon l'invention sont préparées à partir d'une solution aqueuse commerciale de glyoxal à 40 % en poids, dans laquelle on introduit, sous agitation, à la température ambiante, successivement les quantités désirées d'urée, de A et enfin de D. Dans des conditions encore plus préférentielles, les compositions selon l'invention sont obtenues en introduisant sous agitation, à la température ambiante, dans la solution aqueuse de glyoxal, la quantité d'urée souhaitée, puis lorsque la solution obtenue est revenue à la température ambiante, on ajoute A et enfin D.

Les compositions selon l'invention présentent d'intéressantes propriétés lorsqu'elles sont introduites dans des sauces de couchage classiques à base de pigments minéraux et de liant(s), destinés au couchage du papier. Elles permettent notamment d'améliorer la résistance à l'abrasion humide, à l'arrachage humide, au poussièrage et au peluchage ainsi que l'inertie vis à vis de l'eau des papiers traités avec des sauces de couchage contenant les compositions selon l'invention. De plus, ces améliorations sont obtenues sans nuire à la blancheur des papiers malgré le fait qu'elles contiennent du glyoxal qui est reconnu pour jaunir les papiers lorsque les conditions de séchage sont sévères. Ces propriétés justifient leur application dans l'industrie papetière pour l'obtention de bains d'enduction tels que les sauces de couchage, et les formulations de size-press diverses destinées notamment au surfaçage des papiers.

L'invention a également pour objet les bains d'enduction contenant les compositions ci-dessus, ainsi que les papiers obtenus par l'emploi des bains d'enduction selon l'invention.

L'invention a enfin pour objet l'application d'au moins une composition définie ci-dessus au traitement de surface des papiers ou cartons.

Les compositions selon l'invention sont incorporées dans les bains d'enduction classiques à base de pigments minéraux et de liant(s), de manière à obtenir environ $0,5 \pm 0,2$ g de glyoxal libre et/ou combiné pour 100 g de pigments minéraux utilisés.

Les exemples suivants illustrent la présente invention sans toutefois la limiter. Dans ces exemples, on a utilisé un papier, sans bois, collé et précouché, de 108 g/m², commercialisé par la Société Saint-Gobain, usine de Condat. Le couchage de ce papier a été effectué avec une dépose d'environ 10 g/m² sur une machine Heliocoater MK IV de la Société Charlestown Engineering, à la vitesse de 600 m/min, avec un lame réservoir, épaisseur 0,508 mm, angle 59°; le couchage est suivi d'un séchage par infrarouge pendant 2 minutes avec une puissance de 36 Kw. Sur le papier couché, on a ensuite déterminé la blancheur avec l'appareil DATACOLOR 3890 puis l'abrasion humide TABER.

L'abrasion humide TABER a été effectuée selon la norme française Q03-055 modifiée, avec des éprouvettes annulaires de diamètres extérieur et intérieur respectivement de 120 et de 7 mm, pendant 20 tours, sous une pression de 100 g, en présence de 10 g d'eau, suivie d'un rinçage avec 10 g d'eau ; on recueille ces 20 g d'eau que l'on complète à 25 g avec de l'eau, puis on détermine la turbidité de ces 25 g d'eau avec un turbidimètre HACH. La turbidité trouvée est exprimée en unités NTU (plus les valeurs de turbidité sont faibles, meilleurs sont les résultats).

## EXEMPLE 1

On mélange sous agitation, à la température ambiante :

- 145,1 g d'une solution aqueuse commerciale de glyoxal à 40 % en poids, soit une mole,
- 7,93 g (132 mmoles) d'urée,
- 5,72 g (15 mmoles) de tétraborate de disodium cristallisé avec 10 molécules d'eau,
- 1,33 g (18 mmoles) d'hydroxyde de calcium,
- 8,6 g d'eau.

Après 30 minutes d'agitation à la température ambiante, on obtient 168,7 g d'une solution limpide présentant un pH de $3,5 \pm 0,5$ et un extrait sec de $42 \pm 1$ %. Le rapport molaire U/G est de 0,132, le rapport molaire tétraborate de disodium sur glyoxal, A/G est de 0,015 et le rapport molaire D/A est de 1,2.

## EXEMPLES D'APPLICATION

Dans ces exemples, on a utilisé un kaolin commercialisé par la Société ENGLISH CHINA CLAY, référence SPS, un latex SBR commercialisé par la Société DOW CHEMICAL, référence DL 950, une carboxyméthylcellulose, CMC, commercialisée par la Société METSA-SERLA, référence Finfix$^R$ 10, de l'alcool polyvinylique commercialisé par la demanderesse, référence Mowiol$^R$ 4-98, un azurant optique commercialisé par la Société BAYER AG, référence Blankophor$^R$ P, un carbonate de calcium commercialisé par la Société OMYA, référence Hydrocarb$^R$ 90, un amidon oxydé, commercialisé par la Société DOITTEAU, référence Amisol$^R$ 5591.

A partir de ces produits, on prépare 4 sauces de couchages désignées, C1, C2, C3 et C4, dont la composition en parties sèches, l'extrait sec et le pH ajusté à la valeur indiquée avec de la soude à 20 % sont donnés dans le tableau I.

TABLEAU I

|  | C1 | C2 | C3 | C4 |
|---|---|---|---|---|
| KAOLIN | 100 | 0 | 100 | 0 |
| CARBONATE DE CALCIUM | 0 | 100 | 0 | 100 |
| LATEX SBR | 10 | 10 | 6 | 6 |
| CMC | 1 | 1 | 0 | 0 |
| AMIDON OXYDE | 0 | 0 | 6 | 6 |
| ALCOOL POLYVINYLIQUE | 0,4 | 0,4 | 0,45 | 0,45 |
| AZURANT OPTIQUE | 0,45 | 0,45 | 0,45 | 0,45 |
| EXTRAIT SEC ( %) | 58,5 | 61,5 | 58,5 | 61,5 |
| pH | 8,5 | 8,5 | 8,5 | 8,5 |

Avec ces 4 sauces de couchage, $C_1$-$C_4$, on a effectué des opérations de couchage du papier, sans additif, puis en introduisant ensuite dans ces 4 sauces de couchage par rapport à 100 parties sèches de pigments, soit 1,5 g de la composition préparée à l'exemple 1, désignée Ex.1, soit 1,5 g d'une solution aqueuse commerciale de glyoxal à 40 % en poids, désignée S2, soit 1 g, 1,29 g ou 1,5 g d'une solution aqueuse commerciale contenant pondéralement 48,5 % d'une résine aminoplaste urée-glyoxal de rapport molaire U/G de 0,4, désignée S1.

Sur les papiers couchés obtenus par ces 24 essais, ayant des déposes identiques, d'environ 10 g/m$^2$, on a déterminé l'abrasion humide TABER, désignée TABER, et la blancheur avec ou sans ultraviolet. Les résultats trouvés sont donnés dans le tableau II dans lequel on a mentionné également les valeurs de variation du pH des sauces de couchage utilisées après 24 heures de stockage, exprimées en unité de pH. Dans tous les cas, on constate une diminution du pH de ces sauces.

L'analyse des résultats mentionnés dans le tableau II montre que, par rapport aux sauces de couchage préparées selon les techniques de l'art antérieur, à dose équivalente de glyoxal libre ou combiné, les compositions selon l'invention permettent d'obtenir un papier couché présentant une excellente blancheur et une meilleure résistance à l'abrasion humide.

## TABLEAU II

| Additifs | | C1 | | | | | | C2 | | | | | | C3 | | | | | | C4 | | | | |
|---|---|---|---|---|---|---|---|---|---|---|---|---|---|---|---|---|---|---|---|---|---|---|---|---|
| | | | Ex.1 | S1 | S2 | S2 | | | Ex.1 | S1 | S2 | S2 | | | Ex.1 | S1 | S2 | S2 | | | Ex.1 | S1 | S2 | S2 |
| Doses | 0 | 1,5 | 1,5 | 1 | 1,29 | 1,5 | 0 | 1,5 | 1,5 | 1 | 1,29 | 1,5 | 0 | 1,5 | 1,5 | 1 | 1,29 | 1,5 | 0 | 1,5 | 1,5 | 1 | 1,29 | 1,5 |
| TABER (NTU) | 208 | 85 | 120 | 115 | 102 | 98 | 345 | 182 | 222 | 200 | 190 | 177 | 638 | 87 | 114 | 102 | 95 | 79 | 1517 | 397 | 475 | 410 | 400 | 395 |
| BLANCHEUR sans UV (%) | 81,6 | 81,2 | 81,0 | 81,1 | 81 | 80,8 | 87,3 | 87,4 | 87,1 | 86,9 | 86,8 | 86,7 | 82,3 | 82,2 | 82,3 | 81,8 | 81,7 | 81,7 | 86,9 | 86,7 | 86,8 | 86,3 | 86,2 | 86,1 |
| BLANCHEUR avec UV (%) | 98,2 | 97,6 | 98,1 | 97,6 | 97,5 | 97,1 | 110,5 | 110,4 | 110,6 | 109,9 | 109,7 | 109,6 | 97,6 | 97,3 | 97,1 | 97,1 | 97,0 | 96,8 | 110,9 | 110,8 | 110,7 | 110,1 | 110 | 110 |
| Variations de pH | -0,3 | -0,5 | -0,8 | -0,8 | -0,9 | -1 | -0,2 | -0,5 | -0,4 | -0,9 | -1 | -1 | -0,4 | -0,7 | -0,6 | -0,9 | -1,2 | -1,4 | -0,3 | -0,6 | -0,4 | -1 | -1 | -1,2 |

EP 0 637 644 B1

**Revendications**

1. Compositions destinées au traitement de surface des papiers et cartons caractérisées par le fait qu'elles contiennent en solution aqueuse un mélange constitué par du glyoxal (G), de l'urée (U), et un sel de métal alcalin d'un acide oxygéné du bore et que le pH desdites compositions est ajusté à un pH inférieur à 6 à l'aide d'un hydroxyde de métal alcalino-terreux.

2. Compositions selon la revendication 1, caractérisées par le fait que le sel de métal alcalin d'un acide oxygéné du bore est de tétraborate de disodium cristallisé avec 10 molécules d'eau , désigné ci-après A.

3. Compositions selon la revendication 2, caractérisées par le fait qu'elles contiennent en solution aqueuse, un mélange de glyoxal (G), d'urée (U) et de tétraborate de disodium cristallisé avec 10 molécules d'eau (A) dans des rapports molaires

$$0,1 \leq \frac{U}{G} \leq 2 \qquad\qquad \text{(Rel. 1)}$$

$$0,01 \leq \frac{A}{G} \leq 0,5 \qquad\qquad \text{(Rel. 2)}$$

et que le pH desdites compositions est ajusté à un pH inférieur à 6 avec de l'hydroxyde de calcium.

4. Compositions selon la revendication 3, caractérisées par le fait qu'elles contiennent en solution aqueuse entre environ 10 % et environ 60 % en poids d'un mélange de glyoxal, d'urée, de tétraborate de sodium cristallisé avec 10 molécules d'eau et d'hydroxyde de calcium.

5. Compositions selon la revendication 4, caractérisées par le fait qu'elles contiennent en solution aqueuse 40 ± 5 % d'un mélange contenant d'une part, pour 1 mole de glyoxal, de 0,1 à 0,5 mole d'urée, de 0,01 à 0,2 mole de tétraborate de disodium cristallisé avec 10 molécules d'eau et une quantité d'hydroxyde de calcium.

6. Compositions selon la revendication 5, caractérisées par la fait que le rapport molaire hydroxyde de calcium (D), sur tétraborate de disodium cristallisé avec 10 molécules d'eau (A), obéit à la relation

$$0,1 \leq \frac{D}{A} \leq 1,3 \qquad\qquad \text{(Rel. 3)}$$

7. Bains d'enduction pour papiers et cartons à base de pigments minéraux et de liants caractérisés par le fait qu'ils contiennent une composition selon l'une quelconque des revendications 1 à 6.

8. Papiers présentant une résistance à l'abrasion humide améliorée caractérisés par le fait qu'ils ont été traités par un bain d'enduction selon la revendication 7.

9. Application au traitement de surface des papiers ou cartons, d'une composition telle que définie à l'une des revendications 1 à 6, dans un bain d'enduction pour papiers et cartons à base de pigments minéraux et de liants.

**Claims**

1. Compositions intended for the surface treatment of papers and cardboards characterized in that they contain, in aqueous solution, a mixture constituted by glyoxal (G), urea (U), and an alkali metal salt of an oxygenated boron acid and that the pH of said compositions is adjusted to a pH of less than 6 using an alkaline-earth metal hydroxide.

2. Compositions according to claim 1, characterized in that the alkali metal salt of an oxygenated boron acid is disodium tetraborate crystallized with 10 molecules of water, designated hereafter A.

3. Compositions according to claim 2, characterized in that they contain in aqueous solution, a mixture of glyoxal (G), urea (U) and disodium tetraborate crystallized with 10 molecules of water (A) in the following molar ratios:

$$0.1 \le \frac{U}{G} \le 2 \qquad \text{(Rel. 1)}$$

$$0.01 \le \frac{A}{G} \le 0.5 \qquad \text{(Rel. 2)}$$

and that the pH of said compositions is adjusted to a pH of less than 6 with calcium hydroxide.

4. Compositions according to claim 3, characterized in that they contain in aqueous solution between about 10% and about 60% by weight of a mixture of glyoxal, urea, sodium tetraborate crystallized with 10 molecules of water and calcium hydroxide.

5. Compositions according to claim 4, characterized in that they contain in aqueous solution $40 \pm 5\%$ of a mixture containing on the one hand, per 1 mole of glyoxal, 0.1 to 0.5 mole of urea, 0.01 to 0.2 mole of disodium tetraborate crystallized with 10 molecules of water and a quantity of calcium hydroxide.

6. Compositions according to claim 5, characterized in that the molar ratio of calcium hydroxide (D) to disodium tetraborate crystallized with 10 molecules of water (A) complies with the following relationship:

$$0.1 \le \frac{D}{A} \le 1.3 \qquad \text{(Rel. 3)}$$

7. Coating baths for papers and cardboards based on mineral pigments and binders characterized in that they contain a composition according to any one of claims 1 to 6.

8. Papers having an improved resistance to abrasion whilst moist characterized in that they have been treated with a coating bath according to claim 7.

9. Use for the surface treatment of papers or cardboards of a composition as defined in one of claims 1 to 6, in a coating bath for papers and cardboards based on mineral pigments and binders.

**Patentansprüche**

1. Zusammensetzungen zur Oberflächenbehandlung von Papier und Pappe, dadurch gekennzeichnet, daß sie in wäßriger Lösung ein aus Glyoxal (G), Harnstoff (U) und einem Alkalimetallsalz einer Sauerstoffsäure von Bor bestehendes Gemisch enthalten, und der pH der Zusammensetzungen mittels eines Erdalkalimetallhydroxids auf einen pH von weniger als 6 eingestellt ist.

2. Zusammensetzungen nach Anspruch 1, dadurch gekennzeichnet, daß das Alkalimetallsalz einer Sauerstoffsäure von Bor Dinatriumtetraborat, kristallisiert mit 10 Molekülen Wasser, nachfolgend als A bezeichnet, ist.

3. Zusammensetzungen nach Anspruch 2, dadurch gekennzeichnet, daß sie in wäßriger Lösung ein Gemisch von Glyoxal (G), Harnstoff (U) und Dinatriumtetraborat, kristallisiert mit 10 Molekülen Wasser, (A) in den molaren Verhältnissen

$$0{,}1 \le \frac{U}{G} \le 2 \qquad \text{(Gl. 1)}$$

$$0{,}01 \le \frac{A}{G} \le 0{,}5 \qquad \text{(Gl. 2)}$$

enthalten, und der pH der Zusammensetzungen mit Calciumhydroxid auf einen pH von weniger als 6 eingestellt ist.

4. Zusammensetzungen nach Anspruch 3, dadurch gekennzeichnet, daß sie in wäßriger Lösung zwischen etwa 10 Gew.-% und etwa 60 Gew.-% eines Gemisches von Glyoxal, Harnstoff, Natriumtetraborat, kristallisiert mit 10 Molekülen Wasser, und Calciumhydroxid enthalten.

5. Zusammensetzungen nach Anspruch 4, dadurch gekennzeichnet, daß sie in wäßriger Lösung 40 ± 5 % eines Gemisches enthalten, welches pro 1 Mol Glyoxal 0,1 bis 0,5 Mol Harnstoff, 0,01 bis 0,2 Mol Dinatriumtetraborat, kristallisiert mit 10 Molekülen Wasser, und eine Menge Calciumhydroxid enthält.

6. Zusammensetzungen nach Anspruch 5, dadurch gekennzeichnet, daß das molare Verhältnis von Calciumhydroxid (D) zu Dinatriumtetraborat, kristallisiert mit 10 Molekülen Wasser, (A) der Gleichung gehorcht:

$$0,1 \leq \frac{D}{A} \leq 1,3 \qquad\qquad \text{(Gl. 3)}$$

7. Beschichtungsbäder für Papier und Pappe auf der Basis von mineralischen Pigmenten und Bindemitteln, dadurch gekennzeichnet, daß sie eine Zusammensetzung nach einem der Ansprüche 1 bis 6 enthalten.

8. Papiere mit verbesserter Naßabriebbeständigkeit, dadurch gekennzeichnet, daß sie mit einem Beschichtungsbad nach Anspruch 7 behandelt sind.

9. Verwendung einer Zusammensetzung nach einem der Ansprüche 1 bis 6 zur Oberflächenbehandlung von Papier oder Pappe in einem Beschichtungsbad für Papier und Pappe auf der Basis von mineralischen Pigmenten und Bindemitteln.